# DEMANDE DE BREVET EUROPEEN

(11) **EP 3 424 580 A1**
(43) Date de publication de la demande: **09.01.2019**
(21) Numéro de dépôt: 18181581.2
(22) Date de dépôt: 04.07.2018
(51) Int. Cl.: B01D 45/12, B01D 45/16, F16D 65/00

(54) **DISPOSITIF DE CAPTATION DE PARTICULES ÉMISES DANS L'AIR PAR UN VÉHICULE**

(30) Priorité: 04.07.2017 FR 1756294
(71) Demandeur: Compagnie Plastic Omnium, 69007 Lyon (FR)
(72) Inventeur: PAGES, Yann, 01800 SAINT-MAURICE-DE-GOURDANS (FR); GILOTTE, Philippe, 01470 BENONCES (FR)
(74) Mandataire: LLR

(57) **Abrégé**

- L'invention concerne un dispositif (10) de captation de particules (20) émises dans l'air par au moins un véhicule (30), ledit dispositif (10) étant destiné à être monté sur un véhicule (40) et comportant successivement :
- un diffuseur d'air (50) permettant de capter l'air autour du véhicule et d'augmenter la pression de l'air capté ;
- un moyen collecteur (60) des particules (20) présentes dans l'air issu du diffuseur d'air (50).

## Description

L'invention concerne le domaine des véhicules automobiles, et plus particulièrement le domaine des dispositifs anti-pollution, aptes à capter par aspiration des particules polluantes émises par des véhicules, et destinés notamment à être utilisés sur des véhicules routiers.

Il est connu que les véhicules en circulation génèrent un ensemble de particules polluantes résultant, par exemple, de l'abrasion de certaines pièces, telles que les freins et les pneus, ou encore, résultant de la combustion du carburant (microparticules émises par les moteurs diesels par exemple).

A titre d'exemples, les plaquettes de frein émettent 30 mg/km de particules ayant un diamètre de 1µm, les pneumatiques émettent 73 mg/km de particules ayant un diamètre de 2µm, et enfin, le pot d'échappement émet 5mg/km de particules.

Ces particules polluantes sont donc dispersées dans l'air, à l'arrière des véhicules en fonctionnement. Or, il est connu que ces particules dispersées dans le milieu ambiant sont nocives pour la santé des êtres vivants.

On connaît des systèmes de freinage équipant un véhicule, aptes à capter directement au niveau des freins les particules émises par les freins de ce même véhicule.

De tels systèmes sont par exemple décrits dans les documents suivants : FR2815099, US8191691 et FR2997743.

Les solutions ainsi connues sont dédiées au véhicule polluant lui-même, et dédiées uniquement au système de freinage. La solution est donc partielle, car de nombreux autres types de particules polluantes sont émis par les véhicules en fonctionnement.

Il est donc apparu un besoin d'améliorer les solutions pour capter un plus grand nombre de particules polluantes.

A cet effet, selon la présente invention, il est proposé d'équiper l'avant d'un véhicule d'un dispositif de captation de particules émises par des véhicules précédant le véhicule équipé du dispositif.

Ainsi, l'invention concerne un dispositif de captation de particules émises dans l'air par au moins un véhicule, ledit dispositif étant destiné à être positionné à l'avant d'un véhicule et comportant successivement :
- un diffuseur d'air permettant de capter l'air autour du véhicule et d'augmenter la pression de l'air capté ;
- un moyen collecteur des particules présentes dans l'air issu du diffuseur d'air.

Le dispositif aspire et collecte ainsi une partie des particules présentes dans l'air ambiant, que ce soit les particules résiduelles ou les particules récemment produites par le véhicule précédent, quelles que soient leurs tailles, y compris celles ayant des dimensions micrométriques et même nanométriques. Cette aspiration entraîne le flux d'air vers un système de filtration qui piège les particules.

Le dispositif peut en outre comporter l'une ou plusieurs des caractéristiques suivantes, prises seules ou en combinaison :
- le diffuseur d'air comporte une conduite d'entrée d'air dont une ouverture est orientée vers l'extérieur du véhicule lorsque le dispositif est monté sur le véhicule ;
- le diffuseur d'air comporte une conduite d'entrée d'air, dont une ouverture est orientée vers l'avant du véhicule lorsque le dispositif est monté sur le véhicule ;
- l'ouverture est munie d'un volet d'obturation ;
- la conduite d'entrée d'air comporte un moyen, tel que des aubages inclinés, pour diriger l'air sous forme de tourbillon dans une partie de la conduite d'entrée d'air de forme conique tronquée ;
- le diffuseur d'air comporte un ventilateur permettant de faciliter l'aspiration de l'air au niveau de l'ouverture ;
- le moyen collecteur comporte un filtre ;
- le dispositif comporte une chambre de tranquillisation montée entre le diffuseur d'air et le moyen collecteur ;
- le moyen collecteur est monté démontable sur la chambre de tranquillisation ;
- le moyen collecteur constitue un filtre à particule de véhicule.

L'invention concerne également une pièce de carrosserie destinée à être montée sur un véhicule, comportant au moins un dispositif selon l'invention.

La pièce de carrosserie peut en outre comporter l'une ou plusieurs des caractéristiques suivantes, prises seules ou en combinaison :
- la pièce de carrosserie constitue une face avant pour véhicule automobile ;
- la pièce de carrosserie comporte une ouverture en regard du diffuseur d'air ;
- la pièce de carrosserie comporte au moins un dispositif positionné au niveau d'au moins un des emplacements suivants, de préférence en chacun de ces emplacements :
   - une entrée d'air de refroidissement centrale ;
   - une entrée d'air de refroidissement latérale gauche ;
   - une entrée d'air de refroidissement latérale droite.
- le moyen collecteur est positionné derrière une poutre choc de la face avant.

L'invention concerne également un véhicule automobile comportant une pièce de carrosserie selon l'invention.

Le véhicule peut comporter un contrôleur adapté à mettre en route le dispositif de captation de particules en permanence, ou seulement lorsque l'une et/ou l'autre des situations suivantes se produit :
- une présence d'un véhicule devant le véhicule ;
- un freinage dudit véhicule ;
- une vitesse inférieure à 50km/h dudit véhicule.

L'invention sera mieux comprise à la lecture des figures annexées, qui sont fournies à titre d'exemples et ne présentent aucun caractère limitatif, dans lesquelles :
- la figure 1 illustre, en coupe, un exemple de réalisation d'un dispositif de captation de particules émises dans l'air par un véhicule ;
- la figure 2 illustre l'émission, par un véhicule, de particules polluantes, qui peuvent être captées par un véhicule équipé d'un dispositif de captation ;
- la figure 3 illustre en détail un exemple un exemple de diffuseur d'air muni d'une conduite d'entrée du dispositif de captation, comportant un volet d'obturation, des aubages inclinés et une conduite d'entrée d'air comportant une partie de forme conique tronquée permettant de générer un mouvement centrifuge ayant tendance à expulser l'air vers le moyen collecteur ;
- la figure 4 illustre un exemple de diffuseur d'air comportant un ventilateur ;
- la figure 5 illustre un exemple de pièce de carrosserie qui comporte des dispositifs de captation de particules.

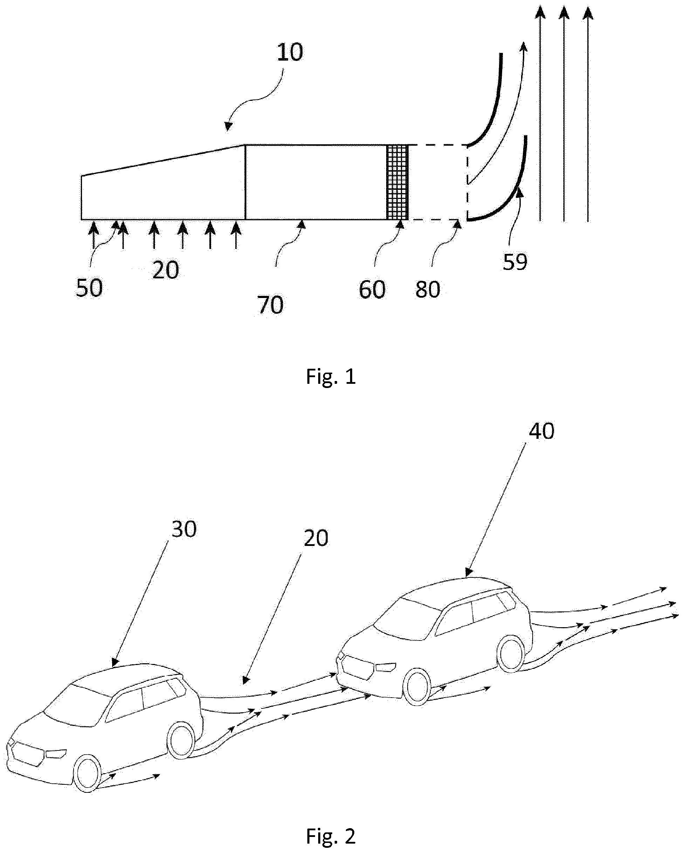

On se réfère maintenant à la figure 1 qui illustre un exemple de réalisation d'un dispositif 10 de captation de particules 20 émises dans l'air par un véhicule 30. Le dispositif 10 est destiné à être positionné sur un véhicule 40. Selon les exemples illustrés par les figures et décrits ci-après, le dispositif est monté à l'avant du véhicule.

La figure 2 illustre l'émission, par un véhicule 30, de particules polluantes, qui peuvent être captées par un véhicule 40 équipé d'un dispositif 10 de captation, lorsque ce dispositif 10 est monté à l'avant du véhicule.

Le dispositif 10 comporte successivement :
- un diffuseur d'air 50 permettant de capter l'air autour du véhicule et d'augmenter la pression de l'air capté ;
- un moyen collecteur 60 des particules 20 présentes dans l'air issu du diffuseur d'air 50.

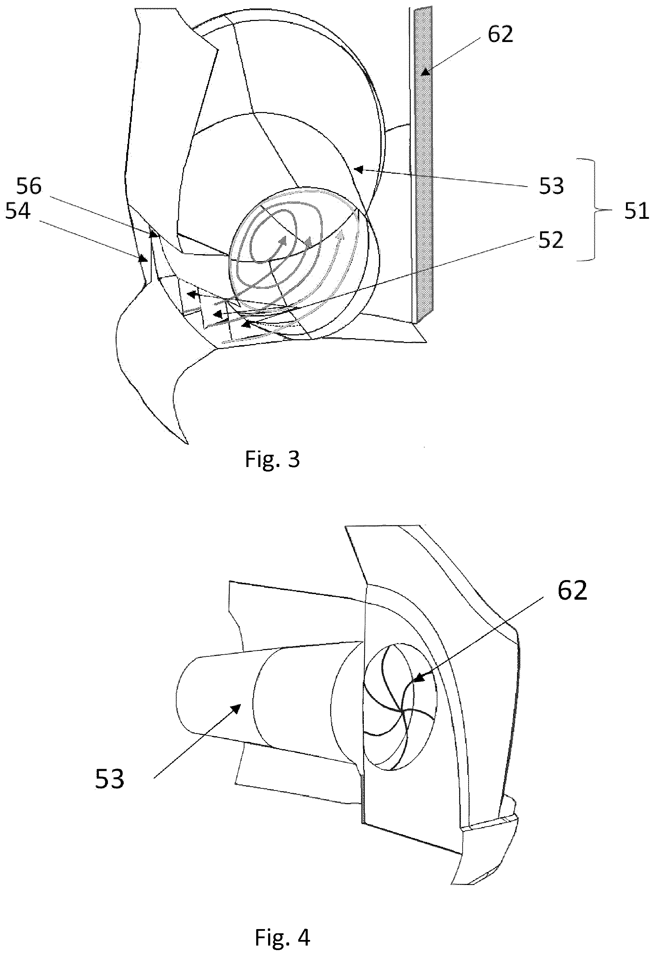

**Un exemple de diffuseur d'air 50** est illustré sur la figure 3. Il comporte une conduite d'entrée d'air 51, dont l'ouverture 54 est orientée vers l'avant du véhicule lorsque le dispositif 10 est monté sur un véhicule 40. L'ouverture 54 peut avoir toute forme, rectangulaire, circulaire...

Selon un mode de réalisation avantageux, l'ouverture 54 est munie d'un volet d'obturation 56, du type « active shutter ». Un tel volet est contrôlable depuis un contrôleur du véhicule, qui gère ainsi le mouvement du volet 56 afin d'obturer ou d'ouvrir l'ouverture 54. En particulier, le volet 56 est en position d'ouverture (figure 3), c'est-à-dire que l'ouverture 54 n'est pas obturée, lorsque le véhicule suit un autre véhicule. Une telle information peut être donnée par un radar de type ACC par exemple. L'ouverture peut avantageusement être commandée en fonction de la vitesse du véhicule 40 équipé du dispositif 10. En effet, pour des raisons aérodynamiques, il peut être nécessaire de fermer l'ouverture 54, même si le véhicule 40 suit un autre véhicule émettant des particules 20. Dans un mode particulier de réalisation, le volet 56 peut s'ouvrir en coulissant sur la partie 53 de la conduite.

Selon un mode de réalisation avantageux, la conduite d'entrée d'air 51 comporte un moyen 52 pour diriger l'air sous forme de tourbillon dans une partie 53 de la conduite d'entrée d'air 51 de forme conique tronquée (de forme sensiblement en entonnoir). Les moyens 52 pour diriger l'air sous forme de tourbillon peuvent être des aubages inclinés 52 comme l'illustre la figure 3. Cette solution facilite l'aspiration de l'air par l'ouverture 54.

Le moyen 52 et la partie 53 permettent de générer un mouvement centrifuge ayant tendance à expulser l'air vers le moyen collecteur 60.

Afin d'améliorer encore l'aspiration, le diffuseur d'air 50 peut comporter un ventilateur 58 (figure 4) permettant de faciliter l'aspiration de l'air au niveau de l'ouverture 54. Le ventilateur est positionné au niveau de l'extrémité de la conduite d'entrée d'air 51 opposée à l'ouverture 54. Le ventilateur 58 permet de générer un mouvement centrifuge ayant tendance à expulser l'air vers le moyen collecteur 60. Il permet ainsi de créer une pression supplémentaire de l'air arrivant au niveau du moyen collecteur 60.

Entre le diffuseur d'air 50 et le collecteur 60, un volume peut-être prévu en tant que chambre de tranquillisation 70, pour stabiliser le flux d'air et la pression. Ce conduit est de préférence en matière plastique. Selon un mode de réalisation, il est fabriqué monobloc avec la conduite d'entrée d'air 51.

Le diffuseur d'air 50 (appelé aussi volute) permet de transformer la vitesse (énergie cinétique) en pression (énergie potentielle) nécessaire pour faire passer l'air à travers le moyen collecteur 60 (filtre captant les particules 20). Ainsi en positionnant un tel diffuseur 50 au niveau de la conduite d'entrée d'air 51, juste après l'ouverture 54, il est possible de réduire la vitesse de l'air aspiré et d'augmenter sa pression. On obtient par exemple les résultats suivants : au niveau de l'ouverture 54, une vitesse de l'ordre de 15 m/s et une pression relative de 0 Pa, au niveau de la chambre de tranquillisation 70 et du moyen collecteur 60, une vitesse de l'ordre de 5 m/s et une pression relative de 100 Pa. Une telle pression et une telle vitesse sont favorables au captage des particules par le moyen collecteur 60.

Le moyen collecteur 60 peut comporter un filtre 62, de sorte que toutes les particules 20 soient piégées dans le filtre 62. Il peut s'agir d'un filtre en média fibreux tissé ou non tissé, ou un média alvéolaire tel qu'une mousse ouverte (porosité connectée).

De façon avantageuse, le moyen collecteur 60 peut être démonté du reste du dispositif, afin de récupérer les particules. Il est ainsi possible de nettoyer le moyen collecteur 60. Ainsi, le moyen collecteur est monté sur la chambre de tranquillisation 70, de façon étanche, et démontable.

Selon un mode de réalisation, le moyen collecteur 60 constitue un filtre à particule (FAP) de véhicule diesel. Lorsque le dispositif 10 est monté sur le véhicule 40, le filtre à particule (FAP) est classiquement positionné sur la ligne d'échappement du véhicule 40.

Selon un exemple de réalisation, l'ouverture 54 a une forme rectangulaire de dimension 0,8m par 0,15m pour un positionnement du dispositif 10 sous l'entrée d'air de refroidissement centrale, de dimension 0,25m de haut sur 0,05m de large pour un positionnement du dispositif 10 sous une entrée d'air de refroidissement latérale.

Selon un mode de réalisation, le dispositif 10 comporte un moyen d'aspiration 80 afin d'améliorer le tirage de l'air au niveau du moyen collecteur 60. Ce moyen d'aspiration 80 peut être positionné en aval du moyen collecteur, comme illustré sur la figure 1. Un tel moyen d'aspiration 80 crée une dépression en aval du moyen collecteur 60. Le moyen d'aspiration 80 peut par exemple être un ventilateur (non représenté sur les figures). Ce ventilateur est placé en aval du moyen collecteur 60, contrairement au ventilateur 58 placé en amont.

Afin d'améliorer encore, l'aspiration de l'air du dispositif 10, le moyen collecteur 60 peut déboucher dans une zone dépressionnaire à forte vitesse afin de bénéficier d'un effet venturi (sortie d'air 59) qui augmente l'effet dépressionnaire en aval du moyen collecteur 60. Le flux d'air en sortie du collecteur 60 est entrainé par le flux d'air autour du véhicule.

L'invention concerne également **une pièce de carrosserie 100** comportant au moins un dispositif 10 selon l'invention positionné en regard d'une ouverture réalisée dans ladite pièce 100.

Selon un exemple avantageux la pièce de carrosserie 100 est destinée à être positionnée à l'avant d'un véhicule 40.

On décrit ci-après un exemple d'une telle pièce 100, constituant une face avant pour véhicule automobile, en particulier du type comportant des entrées d'air permettant de refroidir le moteur du véhicule.

On appelle face avant pour véhicule automobile, un ensemble de composants situés en avant des refroidisseurs d'air, comportant au moins le parechoc. Une face avant peut en outre comporter : des éléments de choc (absorbeurs), une poutre, des éléments de carénage, des éléments de conduite d'air, des ailes avant, un pare boue (arche de roue)...

On connaît des faces avant de véhicules comportant des entrées d'air de refroidissement qui sont prévues à l'avant des véhicules automobiles pour en refroidir le moteur. En général, le refroidissement s'opère par l'intermédiaire d'un échangeur air/liquide de refroidissement, également désigné radiateur, et/ou d'un refroidisseur d'air de suralimentation, appelé aussi en abrégé RAS. Ces deux dispositifs doivent être alimentés par un flux d'air provenant de l'extérieur pour assurer leur fonction de refroidissement.

Le radiateur est généralement alimenté au moyen d'une entrée d'air de refroidissement centrale, alors que le RAS est généralement alimenté au moyen d'une entrée d'air de refroidissement latérale en face avant du parechoc, qui peuvent diriger le flux d'air arrivant sur la face avant, vers des parties latérales du parechoc pour ressortir au niveau des roues avant du véhicule.

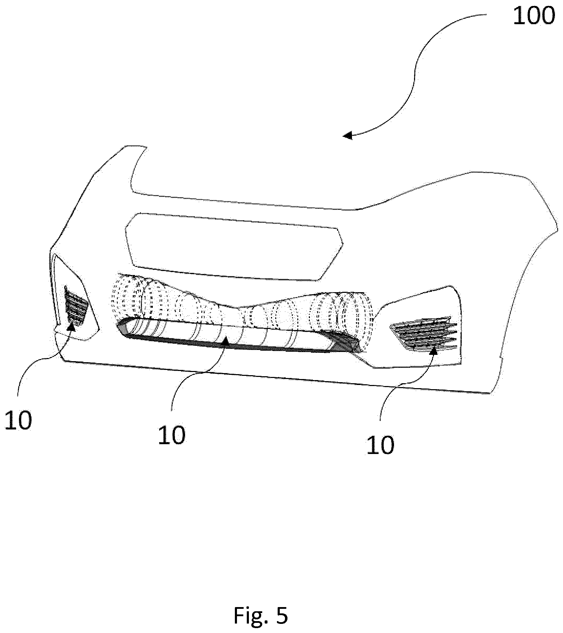

La figure 5 illustre une face avant 100 de véhicule automobile, comportant au moins un dispositif 10 selon l'invention.

Si la face avant 100 comporte plusieurs dispositifs 10, alors la face avant 100 comporte une ouverture en regard de chaque moyen d'entrée d'air 50 des dispositifs 10.

Le demandeur a établi (voir figure 2) que la plupart des particules issues du freinage sont émises sur les côtés du véhicule, à droite et à gauche, au niveau des roues. Au contraire, les particules issues des pneumatiques sont émises vers le centre du véhicule (par opposition à droite et gauche, et donc proche de l'axe Y0 du véhicule).

Partant de cette constatation, la face avant 100 comporte un dispositif 10 au niveau d'au moins un des emplacements suivants, de préférence en chacun de ces emplacements :
- l'entrée d'air de refroidissement centrale ;
- l'entrée d'air de refroidissement latérale gauche ;
- l'entrée d'air de refroidissement latérale droite.

La figure 5 illustre le cas où un dispositif 10 est monté au niveau de ces trois emplacements.

Selon un autre mode de réalisation, la face avant 100 comporte un dispositif 10 au niveau d'au moins un des emplacements suivants, situés en partie basse de la face avant 100, de préférence en chacun de ces emplacements :
- une ouverture centrale positionnée sous l'entrée d'air de refroidissement centrale ;
- une ouverture latérale positionnée sous l'entrée d'air de refroidissement latérale gauche ;
- une ouverture latérale positionnée sous l'entrée d'air de refroidissement latérale droite.

Selon un mode réalisation avantageux, le moyen collecteur 60 est positionné derrière la poutre de la face avant 100. Ainsi, en cas d'accident lors d'un choc avant du véhicule, la poutre protège le moyen collecteur 60, évitant ainsi une dispersion des particules 20 polluantes stockées sur le moyen collecteur 60.

L'invention concerne également **un véhicule automobile** 40 comportant une pièce de carrosserie 100 selon l'invention.

Le véhicule comporte un contrôleur permettant de mettre en oeuvre un procédé de captation de particules émises dans l'air, utilisant le dispositif 10 selon l'invention.

Le contrôleur est adapté à mettre en route le ou les dispositifs 10 de captation de particules en permanence, ou seulement lorsque l'une et/ou l'autre des situations suivantes se produit :
- présence d'un véhicule 30 devant le véhicule 40 ;
- uniquement au freinage du véhicule 40 équipé du dispositif 10 ; en effet, 80% des freinages sont dus au freinage du véhicule 30 précédent ;
- à petite vitesse (inférieure à 50km/h), car on souhaite agir préférentiellement en mode urbain.

La mise en route du dispositif 10 signifie l'ouverture du ou des volets d'obturation de l'ouverture 54, et la mise en marche du ventilateur.

Selon un mode de réalisation, le véhicule 40 comporte une trappe de maintenance afin d'accéder au moyen collecteur 60. Il est ainsi aisé de nettoyer ou changer le moyen collecteur lorsqu'il est saturé en particules 20.

Selon un autre mode de réalisation, le véhicule 40 comporte une face avant 100 qui comporte au moins un dispositif 10 au niveau de l'ouverture centrale positionnée sous l'entrée d'air de refroidissement centrale. L'entrée d'air de refroidissement centrale est équipée de volets mobiles, appelés « active shutters », qui permettent d'obturer l'entrée d'air centrale lorsque les volets sont en position fermée. Pour améliorer l'efficacité du captage des particules20, les volets mobiles sont en position fermée.

L'invention n'est pas limitée aux modes de réalisation présentés et d'autres modes de réalisation apparaîtront clairement à l'homme du métier. Il est notamment possible de positionner le dispositif 10 de captation de particules sur une autre pièce qu'une face avant, par exemple, au niveau des sous caisses, des passages de roue, et même à l'arrière du véhicule au niveau de déflecteur ou de diffuseur.

### Liste des références

- 10: : dispositif de captation de particules émises dans l'air par un véhicule
- 20: : particules émises dans l'air par un véhicule
- 30: : véhicule émettant dans l'air des particules
- 40: : véhicule équipé d'un dispositif 10 de captation de particules
- 50: : diffuseur d'air du dispositif 10 de captation
- 51: : conduite d'entrée d'air du diffuseur d'air 50
- 52: : moyen pour générer un mouvement centrifuge de l'air aspiré ayant tendance à expulser l'air vers le moyen collecteur 60
- 53: : partie de la conduite d'entrée d'air 51 de forme conique tronquée permettant de générer un mouvement centrifuge de l'air aspiré ayant tendance à expulser l'air vers le moyen collecteur 60
- 54: : ouverture de la conduite d'entrée d'air 51
- 56: : volet d'obturation de l'ouverture 54
- 58: : ventilateur permettant de faciliter l'aspiration de l'air au niveau de l'ouverture 54
- 59: : sortie d'air à effet venturi permettant de faciliter le passage d'air à travers le moyen collecteur 60
- 60: : moyen collecteur du dispositif 10 de captation, pour collecter les particules 20
- 62: : filtre du moyen collecteur 60
- 70: : chambre de tranquillisation, placée entre le diffuseur d'air 50 et le moyen collecteur 60
- 80: : moyen d'aspiration en aval du moyen collecteur 60
- 100: : pièce de carrosserie comportant au moins un dispositif 10 de captation de particules

## Revendications

1. Dispositif (10) de captation de particules (20) émises dans l'air par au moins un véhicule (30), ledit dispositif (10) étant destiné à être monté sur un véhicule (40) et comportant successivement :
- un diffuseur d'air (50) permettant de capter l'air autour du véhicule et d'augmenter la pression de l'air capté ;
- un moyen collecteur (60) des particules (20) présentes dans l'air issu du diffuseur d'air (50).

2. Dispositif (10) selon la revendication 1, dans lequel le diffuseur d'air (50) comporte une conduite d'entrée d'air (51) dont une ouverture (54) est orientée vers l'extérieur du véhicule (40) lorsque le dispositif (10) est monté sur le véhicule (40).

3. Dispositif (10) selon la revendication 2, dans lequel le diffuseur d'air (50) comporte une conduite d'entrée d'air (51), dont une ouverture (54) est orientée vers l'avant du véhicule (40) lorsque le dispositif (10) est monté sur le véhicule (40).

4. Dispositif (10) selon la revendication précédente, dans lequel l'ouverture (54) est munie d'un volet d'obturation (56).

5. Dispositif (10) selon l'une des revendications 2 à 4, dans lequel la conduite d'entrée d'air (51) comporte un moyen (52), tel que des aubages inclinés, pour diriger l'air sous forme de tourbillon dans une partie (53) de la conduite d'entrée d'air (52) de forme conique tronquée.

6. Dispositif (10) selon l'une des revendications 2 à 5, dans lequel le diffuseur d'air (50) comporte un ventilateur (58) permettant de faciliter l'aspiration de l'air au niveau de l'ouverture (54).

7. Dispositif (10) selon l'une des revendications précédentes, dans lequel le moyen collecteur (60) comporte un filtre (62).

8. Dispositif (10) selon l'une des revendications précédentes, comportant une chambre de tranquillisation (70) montée entre le diffuseur d'air (50) et le moyen collecteur (60).

9. Dispositif (10) selon la revendication précédente, dans lequel le moyen collecteur (60) est monté démontable sur la chambre de tranquillisation (70).

10. Dispositif (10) selon l'une des revendications précédentes, dans lequel le moyen collecteur (60) constitue un filtre à particule (FAP) de véhicule.

11. **Pièce de carrosserie** (100) destinée à être montée sur un véhicule (40), **caractérisée en ce qu'**elle comporte au moins un dispositif (10) selon l'une des revendications précédentes.

12. Pièce de carrosserie (100) selon la revendication précédente, constituant une face avant pour véhicule automobile.

13. Pièce de carrosserie (100) selon la revendication précédente, comportant une ouverture en regard du diffuseur d'air (50).

14. Pièce de carrosserie (100) selon l'une des revendications 11 à 13, comportant au moins un dispositif (10) positionné au niveau d'au moins un des emplacements suivants, de préférence en chacun de ces emplacements :
- une entrée d'air de refroidissement centrale ;
- une entrée d'air de refroidissement latérale gauche ;
- une entrée d'air de refroidissement latérale droite.

15. Pièce de carrosserie (100) selon l'une des revendications 11 à 14, dans laquelle le moyen collecteur (60) est positionné derrière une poutre choc de la face avant (100).

16. **Véhicule automobile** (40) comportant une pièce de carrosserie (100) selon l'une des revendications 11 à 15.

17. Véhicule automobile (40) selon la revendication précédente, comportant un contrôleur adapté à mettre en route le dispositif (10) de captation de particules en permanence, ou seulement lorsque l'une et/ou l'autre des situations suivantes se produit :
- une présence d'un véhicule (30) devant le véhicule (40) ;
- un freinage dudit véhicule (40) ;
- une vitesse inférieure à 50km/h dudit véhicule (40).
